# FASCICULE DE BREVET EUROPEEN

(11) **EP 3 519 259 B1**
(45) Date de publication et mention de la délivrance du brevet: **01.12.2021**
(21) Numéro de dépôt: 17745360.2
(22) Date de dépôt: 03.08.2017
(51) Int. Cl.: B60S 1/52, B60S 1/56, G02B 27/00, B60S 1/54

(54) **DISPOSITIF DE NETTOYAGE DESTINE A PROJETER AU MOINS UN FLUIDE VERS UNE SURFACE A NETTOYER D'UN VEHICULE AUTOMOBILE**
REINIGUNGSVORRICHTUNG ZUM VERSPRÜHEN VON MINDESTENS EINER FLÜSSIGKEIT AUF EINE ZU REINIGENDE OBERFLÄCHE EINES KRAFTFAHRZEUGS
CLEANING DEVICE INTENDED FOR SPRAYING AT LEAST ONE FLUID ONTO A SURFACE TO BE CLEANED OF A MOTOR VEHICLE

(30) Priorité: 28.09.2016 FR 1659179
(43) Date de publication de la demande: 07.08.2019
(73) Titulaire: Valeo Systèmes d'Essuyage, 78322 Le Mesnil Saint Denis (FR)
(72) Inventeur: GRASSO, Giuseppe, 63500 Issoire (FR); KOLANOWSKI, Grégory, 63500 Issoire (FR); TREBOUET, Marcel, 78322 Le Mesnil Saint Denis (FR)
(74) Mandataire: Valeo Visibility
(86) Numéro de dépôt international: PCT/EP2017/069634
(87) Numéro de publication internationale: WO 2018/059802

(56) Documents cités:
- EP-A1- 3 121 071
- EP-A1- 3 333 026
- US-A- 5 657 929
- US-A1- 2010 230 991
- US-A1- 2011 073 142
- US-A1- 2015 183 406
- US-A1- 2015 343 999

## Description

La présente invention se rapporte au domaine des dispositifs d'aide à la conduite et, plus particulièrement, au domaine des systèmes de détection optique utilisés à cette fin. L'invention concerne plus particulièrement les dispositifs de nettoyage destinés à projeter au moins un fluide vers une surface à nettoyer d'un véhicule automobile, tel qu'un capteur optique d'un système de détection optique.

Le document US 2011/073142 A1 divulgue un dispositif de nettoyage selon le préambule de la revendication 1.

On appelle système de détection optique tout système comportant des capteurs optiques, tels que des caméras, des capteurs laser (communément appelés LIDAR) ou autres capteurs basés sur l'émission et/ou la détection de la lumière dans le spectre visible ou invisible pour l'Homme, en particulier l'infrarouge.

De tels systèmes de détection optiques équipent un nombre de plus en plus grand de véhicules automobiles afin d'aider le conducteur du véhicule dans certaines situations de conduite, dont une, bien connue, est l'aide au stationnement. Pour que cette aide soit la plus efficace possible, les données fournies par le système de détection optique doivent être de la meilleure qualité possible, et il est donc indispensable de disposer d'optiques propres pour réaliser ces acquisitions de données. Pour ce faire, un dispositif de nettoyage d'un capteur du système de détection optique (par exemple la lentille d'une caméra de prise de vues) peut être commandé pour injecter, sur ledit capteur, un fluide nettoyant juste avant que soit réalisée la détection (par exemple la prise de vue). Ces dispositifs de nettoyage ne doivent pas gêner le fonctionnement du capteur optique, et ils doivent être le plus compact possible pour répondre aux contraintes d'encombrement du véhicule. Par ailleurs, le fluide de nettoyage projeté sur un tel capteur optique pour en chasser les salissures étant, le plus souvent, un liquide, il est intéressant de sécher le plus rapidement possible ce capteur optique afin d'éviter tout risque de pollution du signal par d'éventuelles traces qu'un tel liquide pourrait laisser (gouttes, coulures, etc ...). Pour cela, il est connu de projeter sur le capteur optique, après le fluide de nettoyage, un flux d'air (ou un autre fluide de séchage) qui permet de débarrasser ce capteur du fluide de nettoyage et des salissures que celui-ci entraîne alors avec lui. De tels dispositifs de nettoyage comportent donc des moyens de transport et de distribution du fluide de nettoyage et du fluide de séchage. Le plus souvent, le circuit de distribution de fluide de nettoyage et le circuit de distribution de fluide de séchage (le plus souvent, de l'air) comportent des portions communes et/ou présentent une forme d'imbrication l'un avec l'autre. En particulier, il est connu de distribuer le fluide de nettoyage et le fluide de séchage sur la surface du capteur optique par un ensemble unique de distribution, qui se présente le plus souvent sous la forme d'une buse de distribution alimentée par un canal de distribution dans lequel sont alternativement amenés le fluide de nettoyage et le fluide de séchage. Ce canal de distribution débouche classiquement, à l'extrémité de la buse de distribution, en un ou plusieurs orifices de distribution configurés pour que le fluide de nettoyage et le fluide de séchage atteignent la plus grande partie possible de la surface de ce capteur. Si un tel agencement présente des avantages en termes d'encombrement, il présente toutefois un risque de mélange des fluides. En particulier, immédiatement avant la distribution du fluide de séchage, une quantité résiduelle plus ou moins importante de fluide de nettoyage peut être restée piégée dans le canal de distribution, et être alors délivrée à la surface du capteur optique en même temps que le fluide de séchage. Il s'ensuit un séchage imparfait du capteur optique, nuisible à un bon fonctionnement de celui-ci.

La présente invention a pour but d'améliorer l'efficacité de tels dispositifs de nettoyage, en évitant tout mélange des fluides de nettoyage et de séchage.

Dans ce but, l'invention a pour objet un dispositif de nettoyage, destiné à projeter au moins un fluide vers une surface à nettoyer d'un véhicule automobile, tel qu'un capteur optique d'un système de détection optique, comprenant au moins un dispositif d'admission et de distribution de fluides dans lequel sont admis sélectivement un fluide de nettoyage et un fluide de séchage depuis un embout d'admission propre à chaque fluide. Le dispositif d'admission et de distribution comporte des canaux distincts de distribution respectivement du fluide de nettoyage et du fluide de séchage, notamment en direction de la surface à nettoyer, et des ensembles d'acheminement distincts de chacun des fluides depuis leur embout d'admission respectif vers leur canal de distribution respectif.

Par surface à nettoyer, on peut comprendre un capteur optique d'un système de détection optique, la lentille d'une caméra, ou un élément particulier de la carrosserie.

Selon une caractéristique de l'invention, les canaux distincts de distribution respectivement du fluide de nettoyage et du fluide de séchage comportent des orifices de distribution propres à chaque canal.

Les canaux distincts de distribution sont ménagés dans une tige d'admission et de distribution agencée dans un corps creux de la tête d'admission et de distribution.

Le corps creux peut présenter une forme générale sensiblement cylindrique, et il peut être réalisé en deux parties reliées entre elles par une bague de fermeture. On peut prévoir que le corps creux est constitué d'une partie amont, formée d'une paroi périphérique et d'un fond amont, d'une partie aval, formée d'une paroi périphérique et d'un fond aval, et d'une bague de fermeture qui assure la liaison entre partie amont et partie aval. Paroi périphérique de la partie amont du corps creux et paroi périphérique de la partie aval du corps creux peuvent alors être toutes deux de forme sensiblement cylindrique et présenter des diamètres intérieurs et extérieurs, ainsi que dimensions axiales, sensiblement identiques. Il faut comprendre ici, ainsi que dans tout ce qui suit, que les dénominations "amont" et "aval" se réfèrent à la direction d'écoulement des fluides de nettoyage et de séchage dans la tête d'admission et de distribution du dispositif de nettoyage selon l'invention. Ainsi, la dénomination "amont" se réfère au côté de celle-ci par lequel ces fluides de nettoyage et de séchage sont admis en son sein, et la dénomination "aval" se réfère au côté de celle-ci par lequel les fluides de nettoyage et de séchage sont distribués à l'extérieur de celui-ci, sur la surface du capteur optique considéré.

La bague de fermeture peut être configurée pour accueillir en appui les parois périphériques des parties amont et aval du corps creux, et elle comporte un premier et un deuxième manchons formant moyens de guidage des parties amont et aval du corps creux lors de l'assemblage de ce dernier. Lors de l'assemblage du corps creux, partie amont et partie aval de ce dernier sont ainsi emboîtées respectivement sur le premier manchon et sur le deuxième manchon. Partie amont, partie aval, et bague de fermeture du corps creux délimitent ainsi une cavité qui forme l'intérieur du corps creux. Le dispositif peut comporter des moyens d'étanchéité de cette cavité vis-à-vis de l'extérieur du dispositif selon l'invention, qui prennent notamment la forme de deux joint toriques insérés chacun dans une gorge agencée à cet effet respectivement en périphérie de la paroi intérieure du fond amont et en périphérie de la paroi intérieure du fond aval.

Le fond amont obture la cavité du corps creux vers l'amont, sensiblement perpendiculairement à la paroi périphérique de la partie amont de celui-ci. A partir du fond amont s'étendent, en direction de l'amont, un embout d'admission du fluide de nettoyage et un embout d'admission du fluide de séchage, distincts. On comprend que les embouts pourraient être ménagés différemment et non tous deux en lien avec le fond amont, dès lors qu'ils permettent la réalisation des fonctions décrites ci-après.

Chacun de ces embouts d'admission peut présenter une forme sensiblement cylindrique et être percé de part en part, d'amont en aval selon la direction de son axe de révolution, d'un canal d'admission du fluide correspondant : l'embout d'admission du fluide de nettoyage est ainsi percé d'un canal d'admission du fluide de nettoyage, et l'embout d'admission du fluide de séchage est percé d'un canal d'admission de ce fluide de séchage.

Selon une caractéristique de l'invention, un embout d'admission débouche dans une cavité formée dans le corps creux et dans laquelle est logée la tige, l'autre embout d'admission débouchant directement dans un tube d'acheminement logé dans un canal d'admission correspondant formé dans la tige.

L'embout d'admission du fluide de nettoyage est percé de part en part, de l'amont vers l'aval, d'un canal d'admission du fluide de nettoyage qui débouche dans la cavité, et notamment en affleurement du fond amont.

L'embout d'admission du fluide de séchage est prolongé par un tube d'acheminement dont l'extrémité aval s'étend dans un canal de distribution du fluide de séchage ménagé dans la tige, ledit embout d'admission du fluide de séchage et ledit tube étant percés de part en part, de l'amont vers l'aval, d'un canal d'admission de ce fluide de séchage qui débouche dans le canal de distribution du fluide de séchage dans la tige.

Selon une série de caractéristiques, prises seules ou en combinaison, et notamment relatives à un agencement selon lequel la tige est mobile dans le corps creux, on pourra prévoir que :
- le dispositif de nettoyage comporte des moyens de déplacement de la tige d'admission et de distribution entre une position de repos et une position déployée à l'intérieur du corps creux ;
- les moyens de déplacement de la tige d'admission et de distribution comprennent des moyens communs avec des ensembles d'acheminement d'un des fluides, et notamment l'ensemble d'acheminement du fluide de nettoyage ;
- l'arrivée de fluide par l'embout d'admission débouchant dans la cavité participe au remplissage de cette cavité et au déplacement de la tige ;
- les moyens de déplacement de la tige d'admission et de distribution comprennent un élément de rappel élastique en position de la tige ;
- le canal de distribution de fluide de séchage présente un diamètre sensiblement constant au moins dans la portion dans laquelle est amenée à se déplacer le tube d'acheminement ;
- une gorge périphérique est agencée dans la paroi extérieure du tube d'acheminement pour accueillir un joint d'étanchéité configuré pour frotter contre le canal de distribution de fluide de séchage dans lequel est logé le tube d'acheminement ;
- de l'extrémité amont de la tige de distribution vers son extrémité aval, le canal de distribution du fluide de séchage présente au moins une portion amont et une portion aval dont le diamètre est inférieur à celui de la portion amont ;
- le diamètre du canal de distribution du fluide de séchage, le diamètre extérieur du tube d'acheminement, et les dimensions du joint torique agencé au voisinage de l'extrémité aval dudit tube d'acheminement sont définis pour que ce dernier puisse coulisser de manière étanche au sein de la portion amont du canal de distribution du fluide de séchage.

Selon une caractéristique de l'invention, un doigt s'étend à l'intérieur du canal de distribution de fluide de nettoyage, le doigt étant décalé par rapport à l'axe d'allongement de l'embout d'admission du fluide de nettoyage. Ce doigt peut notamment être disposé, transversalement à la direction d'allongement du dispositif, entre l'embout d'admission et le tube d'acheminement, et il peut présenter une forme sensiblement cylindrique.

Le canal de distribution du fluide de nettoyage et le canal de distribution du fluide de séchage peuvent être agencés, au sein de la tige de distribution, de telle manière que le tube d'acheminement et le doigt de ce même corps creux puissent simultanément être engagés respectivement dans le canal de distribution du fluide de séchage et dans le canal de distribution du fluide de nettoyage lors de l'assemblage de la tête d'admission et de distribution.

Avantageusement, l'embout d'admission du fluide de nettoyage, l'embout d'admission du fluide de séchage, le tube d'acheminement, les canaux d'admission des fluides de nettoyage et du fluide de séchage, et ce doigt sont tous parallèles entre eux.

Selon une caractéristique de l'invention, le canal de distribution du fluide de nettoyage présente des portions de diamètres différents, ces diamètres allant, de l'extrémité amont de la tige de distribution vers son extrémité aval, en décroissant, au moins l'extrémité aval du doigt étant configurée pour s'étendre dans des portions de diamètres différents selon le déplacement relatif du doigt par rapport à la tige.

Ainsi, de l'extrémité amont de la tige de distribution vers son extrémité aval, le canal de distribution du fluide de nettoyage comporte au moins une portion amont, une portion intermédiaire, dont le diamètre est légèrement inférieur à celui de la portion amont, et une portion aval, dont le diamètre est inférieur à celui de la portion intermédiaire. Le diamètre de la portion intermédiaire du canal de distribution du fluide de nettoyage, le diamètre extérieur du doigt du corps creux, et les dimensions du joint torique agencé au voisinage de l'extrémité aval de ce doigt sont définis pour que ledit doigt puisse coulisser de manière étanche au sein de ladite portion intermédiaire du canal de distribution du fluide de nettoyage.

Selon des caractéristiques additionnelles de l'invention, on pourra prévoir que le fond aval du corps creux est percé d'un orifice dont les parois se prolongent, d'une part vers l'amont, au sein de la cavité du corps creux et, d'autre part, vers l'aval, à l'extérieur du corps creux, par un manchon dont les caractéristiques et dimensions seront détaillées plus loin.

Selon différentes caractéristiques, prises respectivement seules ou en combinaison avec d'autres caractéristiques précédemment citée ou à venir, on pourra prévoir que :
- le diamètre du canal de distribution du fluide de nettoyage en sa portion intermédiaire, le diamètre extérieur du doigt du corps creux, et les dimensions du joint torique agencé au voisinage de l'extrémité aval de ce doigt sont définis pour que ledit doigt puisse coulisser de manière étanche au sein de la portion intermédiaire du canal de distribution du fluide de nettoyage et laisser passage au fluide de nettoyage lorsque le joint est au sein de la portion amont ;
- la tige de distribution comporte, au voisinage de son extrémité amont, une couronne ;
- l'élément de rappel élastique prend appui contre une face de la couronne ;
- une gorge périphérique est agencée dans la paroi extérieure de la couronne, pour accueillir un joint d'étanchéité, de telle manière que la tige de distribution, équipé dudit joint, puisse coulisser de manière étanche au sein du corps creux.

Avantageusement, le canal de distribution du fluide de nettoyage et le canal de distribution du fluide de séchage sont transversalement agencés, au sein de la tige de distribution, avec un espacement sensiblement identique à celui qui sépare le doigt du corps creux et le tube d'acheminement qui prolonge l'embout d'admission du fluide de séchage au sein dudit corps creux. En d'autres termes, corps creux et tige du dispositif selon l'invention sont respectivement configurés pour que ce tube d'acheminement et le doigt de ce même corps creux puissent simultanément être engagés respectivement dans le canal de distribution du fluide de séchage et dans le canal de distribution du fluide de nettoyage.

Selon une caractéristique de l'invention, le dispositif de nettoyage peut comprendre, outre la tête d'admission et de distribution porteuse des canaux de distribution distincts, un réservoir de stockage du fluide de nettoyage, un réservoir de stockage du fluide de séchage, et des éléments de pilotage de la circulation de fluide de nettoyage entre le réservoir et la tête. Ces éléments de pilotage, qui peuvent prendre la forme d'un distributeur piloté par un module de commande, sont configurés pour prendre plusieurs positions selon lesquelles :
- il est possible de bloquer l'admission de fluide de nettoyage dans la tête d'admission et de distribution dans une position de repos ;
- il est possible d'alimenter la tête en fluide de nettoyage afin de déplacer la tête dans une position de nettoyage d'une part et projeter du fluide de nettoyage d'autre part ; et
- il est possible de bloquer le fluide de nettoyage dans la cavité et maintenir la tête dans la position de nettoyage, l'alimentation du fluide de séchage pouvant être pilotée indépendamment de l'alimentation du fluide de nettoyage.

L'invention concerne en outre un véhicule automobile équipé d'un système de détection optique, caractérisé en ce qu'il comporte au moins un dispositif de nettoyage tel qu'il vient d'être précédemment décrit pour le nettoyage d'un capteur optique de ce système de détection optique.

D'autres caractéristiques, détails et avantages de l'invention et de son fonctionnement ressortiront plus clairement à la lecture de la description donnée ci-après à titre indicatif, en relation avec les figures annexées, dans lesquelles :
- la figure 1 est une vue schématique en perspective d'un capteur d'un système de détection optique et d'un dispositif de nettoyage associé ;
- la figure 2 est une vue schématique en coupe de la tête d'admission et de distribution d'un dispositif de nettoyage selon l'invention, dans sa position de repos telle que décrite ci-dessus,
- la figure 3 est une vue schématique en coupe de la tête d'admission et de distribution d'un dispositif de nettoyage selon l'invention, dans sa position de nettoyage telle que décrite ci-dessus,
- et la figure 4 est une vue générale schématique de l'architecture hydraulique d'un dispositif de nettoyage selon l'invention.

Il est tout d'abord à noter que si les figures exposent l'invention de manière détaillée pour sa mise en œuvre, elles peuvent bien entendu servir à mieux définir l'invention le cas échéant.

Il est également rappelé que, dans la description qui suit, les dénominations "amont" et "aval" se réfèrent à la direction d'écoulement des fluides de nettoyage et de séchage dans le dispositif de nettoyage selon l'invention. Ainsi, la dénomination "amont" se réfère au côté du dispositif selon l'invention par lequel ces fluides de nettoyage et de séchage sont admis en son sein, et la dénomination "aval" se réfère au côté du dispositif selon l'invention par lequel les fluides de nettoyage et de séchage sont distribués à l'extérieur de celui-ci, vers une surface d'un capteur optique d'un système de détection optique d'un véhicule automobile.

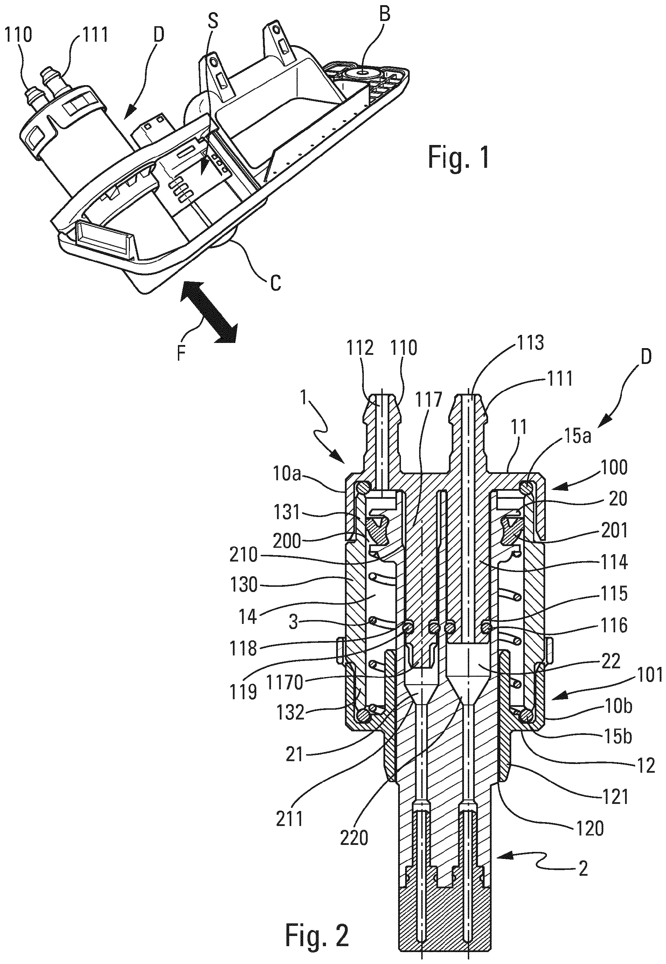

Sur la figure 1, on a illustré un dispositif de nettoyage selon l'invention, c'est-à-dire un dispositif de nettoyage d'un capteur optique C, faisant partie d'un système de détection optique S pour véhicule automobile, le dispositif de nettoyage comprenant au moins un dispositif d'admission et de distribution de fluides D dans lequel sont admis sélectivement un fluide de nettoyage et un fluide de séchage à travers deux ensembles d'acheminement distincts depuis un embout d'admission 110, 111 propre à chaque fluide. Le dispositif d'admission et de distribution de fluides D est mobile en translation dans la direction illustrée par la flèche F, entre une position déployée où des orifices de distribution sont disposés en regard du capteur optique, et une position escamotée (visible sur la figure 1) où le dispositif d'admission et de distribution de fluides est rétracté à l'intérieur d'un boîtier de structure de carrosserie B du véhicule pour d'une part le protéger et d'autre part ne pas gêner la détection optique du capteur.

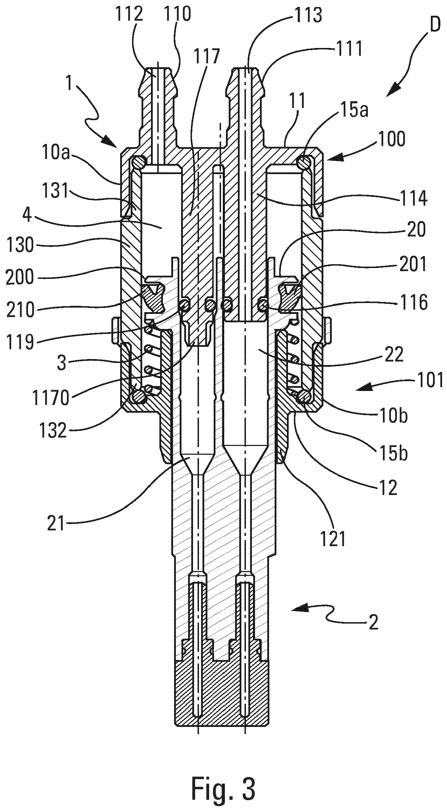

En référence aux figures 2 et 3, une tête d'admission et de distribution d'un dispositif de nettoyage selon l'invention comporte au moins un corps creux 1 d'admission respectivement d'un fluide de nettoyage et d'un fluide de séchage, une tige 2 de distribution de ces fluides, et un élément de rappel élastique du type ressort 3. La tige est amenée à coulisser à l'intérieur du corps creux, entraînée en translation entre deux positions extrêmes du fait de l'effort de rappel élastique du ressort d'une part et de la pression d'un fluide participant au nettoyage et/ou au séchage et passant par le corps creux avant de sortir de la tête d'admission et de distribution.

Dans l'exemple illustré par les figures 2 et 3, le corps creux 1 a une forme générale sensiblement cylindrique, et il comporte deux parties reliées entre elles par une bague de fermeture. Plus précisément, le corps creux 1 est constitué d'une partie amont 100, formée d'une paroi périphérique 10a et d'un fond amont 11, d'une partie aval 101, formée d'une paroi périphérique 10b et d'un fond aval 12, et d'une bague de fermeture qui assure la liaison entre partie amont 100 et partie aval 101. Paroi périphérique 10a de la partie amont 100 du corps creux 1 et paroi périphérique 10b de la partie aval 101 du corps creux 1 sont toutes deux de forme sensiblement cylindrique et présentent des diamètres intérieurs et extérieurs, ainsi que dimensions axiales, sensiblement identiques.

Selon le mode de réalisation de l'invention plus particulièrement illustré sur les figures 2 et 3, la bague de fermeture a une forme sensiblement cylindrique et comporte, selon la direction de son axe de révolution, une partie centrale 130 qui se prolonge, vers l'amont, par un premier manchon 131 de même diamètre intérieur que la partie centrale 130 et de diamètre extérieur légèrement inférieur à celui de cette dernière, et, vers l'aval, par un deuxième manchon 132, de même diamètre intérieur que la partie centrale 130 et de diamètre extérieur légèrement inférieur à celui de cette dernière. Le diamètre extérieur de la partie centrale 130 de la bague de fermeture est sensiblement égal au diamètre extérieur des parois périphériques, respectivement 10a et 10b, des parties amont et aval, respectivement 100 et 101, du corps creux 1. De même, les diamètres extérieurs des premier et deuxième manchons 131 et 132 sont identiques, et ils sont très légèrement inférieurs aux diamètres intérieurs des parois périphériques, respectivement 10a et 10b, des parties amont et aval, respectivement 100 et 101, du corps creux 1. Axialement, les dimensions, respectivement, du premier manchon 131 et du deuxième manchon 132 de la bague de fermeture, sont sensiblement égales aux dimensions axiales intérieures des parois périphériques, respectivement 10a et 10b, des parties amont et aval du corps creux 1. Ainsi, les épaulements constitués à l'intersection de la paroi extérieure de la partie centrale 130 de la bague de fermeture et des parois extérieures des premier et deuxième manchons, respectivement 131 et 132, de cette même bague de fermeture, forment, lors de l'assemblage du corps creux 1, des surfaces d'appui pour les parois périphériques, respectivement 10a et 10b, des parties amont et aval du corps creux 1. Lors de l'assemblage du corps creux 1, partie amont et partie aval de ce dernier sont ainsi emboîtées respectivement sur le premier et sur le deuxième manchon 131, 132 qui réalisent alors une forme de guidage des parois périphériques des parties amont et aval du corps creux 1 dans cet emboîtement.

Partie amont 100, partie aval 101, et bague de fermeture du corps creux 1 délimitent ainsi une cavité 14 qui forme l'intérieur du corps creux 1. Des moyens d'étanchéité de la cavité 14 vis-à-vis de l'extérieur du dispositif selon l'invention peuvent être insérés entre la bague de fermeture et, respectivement, la partie amont 100 et la partie aval 101 du corps creux 1, et ces moyens d'étanchéité peuvent notamment prendre la forme de deux joint toriques, respectivement 15a et 15b, insérés chacun dans une gorge agencée à cet effet respectivement en périphérie de la face interne du fond amont 11 et en périphérie de la face interne du fond aval 12.

Lors de l'assemblage du corps creux 1, l'extrémité du premier manchon 131 et l'extrémité du deuxième manchon 132 de la bague de fermeture viennent en appui sur ces joints toriques, fermant ainsi la cavité 14 du corps creux de manière étanche. Cette fermeture peut être renforcée par des moyens supplémentaires de blocage de la bague de fermeture avec les parties amont et aval du corps creux, par exemple des vis, non représentés sur les figures 2 et 3, et insérées radialement entre paroi périphérique 10a de la partie amont du corps creux et premier manchon 131 de la bague de fermeture, d'une part, et/ou entre paroi périphérique 10b de la partie aval du corps creux et deuxième manchon 132 de la bague de fermeture, d'autre part.

Le fond amont 11 obture la cavité 14 et le corps creux 1 vers l'amont, sensiblement perpendiculairement à la paroi périphérique 10a de la partie amont 100 dudit corps creux 1. A partir du fond amont 11 s'étendent, à l'opposé de la cavité 14, un embout d'admission 110 du fluide de nettoyage et un embout d'admission 111 du fluide de séchage.

Dans le cas illustré par les figures 2 et 3, chacun de ces embouts présente une forme sensiblement cylindrique et est percé de part en part, de l'amont vers l'aval, d'un canal d'admission du fluide correspondant : l'embout d'admission 110 du fluide de nettoyage est ainsi percé de part en part, de l'amont vers l'aval, d'un canal d'admission 112 du fluide de nettoyage, et l'embout d'admission 111 du fluide de séchage est percé de part en part, de l'amont vers l'aval, d'un canal d'admission 113 de ce fluide de séchage.

Le canal 112 d'admission du fluide de nettoyage débouche dans la cavité 14 en affleurement de la paroi intérieure du fond amont 11, et tel que cela a pu être précisé précédemment, la présence de fluide de nettoyage dans la cavité, arrivant par le canal 112 d'admission, participe à exercer une pression sur la tige de distribution logée dans cette cavité, de manière à la déplacer entre ses positions extrêmes.

Alors que l'embout d'amission 110 du fluide de nettoyage s'étend depuis le fond amont 11 et présente un canal débouchant dans la cavité 14, l'embout d'admission 111 du fluide de séchage se prolonge, au sein de la cavité 14 du corps creux 1, en un tube d'acheminement 114 qui s'étend coaxialement à l'embout d'admission 111 du fluide de séchage et qui est agencé à l'intérieur du corps creux dans un conduit ménagé dans la tige 2.

Le canal 113 d'admission du fluide de séchage s'étend jusqu'à l'extrémité aval de ce tube d'acheminement 114, au sein de la tige 2 dans laquelle il débouche. Ainsi, les canaux d'admission, respectivement 112 du fluide de nettoyage et 113 du fluide de séchage débouchent distinctement dans la cavité 14 ou dans la tige 2.

Une gorge périphérique 115 est agencée dans la paroi extérieure du tube d'acheminement 114, au voisinage de l'extrémité aval de celui-ci, pour accueillir un joint 116, par exemple un joint torique dont le rôle sera précisé plus loin.

Parallèlement, ou sensiblement parallèlement, au tube d'acheminement 114, un doigt 117, avantageusement sensiblement cylindrique, s'étend également à partir de la face intérieure du fond amont 11. Le doigt 117 est agencé sensiblement entre le tube d'acheminement 114 et l'orifice débouchant du canal 112 d'admission du fluide de nettoyage. Avantageusement, l'axe de révolution du doigt 117 est sensiblement parallèle à l'axe du canal 113 d'admission du fluide de séchage et à l'axe du canal 112 d'admission du fluide de nettoyage. Conformément à la disposition du tube d'acheminement 114, le doigt 117 est agencé de manière à venir loger dans un conduit ménagé dans la tige.

En d'autres termes, et notamment tel qu'illustré sur les figures 2 et 3, le tube d'acheminement 114, les canaux d'admission, respectivement 112 pour le fluide de nettoyage et 113 pour le fluide de séchage, et le doigt 117 sont tous parallèles entre eux, le tube d'acheminement 114 prolongeant le canal d'admission 113 du fluide de séchage tandis que le doigt est décalé par rapport au canal d'admission 112 du fluide de nettoyage.

Une gorge périphérique 118 est agencée dans la paroi extérieure du doigt 117, au voisinage de l'extrémité aval de celui-ci, pour accueillir un joint 119, par exemple un joint torique, dont le rôle sera précisé plus loin.

Dans l'exemple de réalisation illustré, la longueur du doigt 117, c'est-à-dire la distance sur laquelle il s'étend depuis le fond amont 11, est légèrement supérieure à la longueur du tube 114. Et notamment, la partie d'extrémité aval du doigt 117, qui s'étend au-delà de la partie d'extrémité aval du tube 114, est légèrement réduit à son extrémité aval. En d'autres termes, le doigt 117 comporte, à son extrémité aval, un appendice terminal 1170 de plus petit diamètre.

Selon l'invention, le fond aval 12 du corps creux 1 est percé d'un orifice 120 dont les parois se prolongent, d'une part vers l'amont, au sein de la cavité 14 du corps creux et, d'autre part, vers l'aval, à l'extérieur du corps creux 1, par un manchon 121, dont le diamètre extérieur est défini en relation avec le ressort 3 pour que ce dernier puisse être inséré autour dudit manchon dans la cavité 14. Les autres formes et dimensions du manchon 121 seront détaillées plus loin.

On va maintenant décrire plus en détails la tige 2 de distribution des fluides de nettoyage et de séchage.

Dans l'exemple plus particulièrement illustré par les figures 2 et 3, la tige 2 de distribution est de forme sensiblement cylindrique, et son diamètre extérieur est légèrement inférieur au diamètre intérieur du manchon 121 de la partie aval 101 du corps creux 1, de telle manière qu'elle puisse coulisser librement au sein dudit manchon tout en restant axialement alignée avec celui-ci. Selon l'invention, la tige de distribution 2 comporte, au voisinage de son extrémité amont, une couronne 20 formant saillie sur le pourtour de la tige de distribution 2.

La tige de distribution 2 est percée, d'amont en aval, par deux canaux distincts, à savoir un canal de distribution 21 du fluide de nettoyage et un canal de distribution 22 du fluide de séchage. Canal 21 de distribution du fluide de nettoyage et canal 22 de distribution du fluide de séchage débouchent chacun, à l'extrémité aval de la tige de distribution 2, en un ou plusieurs orifices de distribution, distincts, non représentés sur les figures. En d'autres termes, un premier canal dans la tige est spécifiquement dédié à la circulation du fluide de nettoyage, et le fluide projeté pour le nettoyage du capteur optique sort d'un ou de plusieurs orifices de distribution ménagés sur ce premier canal, tandis qu'un deuxième canal, agencé à côté du premier canal dans la tige et distinct de celui-ci, est spécifiquement dédié à la circulation du fluide de séchage, et le fluide projeté pour le séchage du capteur sort d'un ou de plusieurs orifices de distribution ménagés spécifiquement sur ce deuxième canal.

Avantageusement, le canal 21 de distribution du fluide de nettoyage et le canal 22 de distribution du fluide de séchage sont parallèles et agencés, dans la tige de distribution 2, avec un espacement sensiblement identique à celui qui sépare le tube d'acheminement 114 du doigt 117 dans le corps creux 1. En d'autres termes, corps creux et tige du dispositif selon l'invention sont respectivement configurés pour que le tube d'acheminement 114 et le doigt 117 puissent simultanément être engagés respectivement dans le canal 22 de distribution du fluide de séchage et dans le canal 21 de distribution du fluide de nettoyage.

On forme de la sorte deux ensembles d'acheminent distincts des fluides de nettoyage et de séchage. Un ensemble d'acheminement du fluide de séchage consiste en l'alignement de l'embout d'admission 111 et du tube d'acheminement 114, percés de part en part du canal d'admission 113, et en le canal de distribution 22 réalisé spécifiquement dans la tige 2 et dans lequel le tube d'acheminement 14 débouche. Le fluide de séchage passe directement de l'embout d'admission 111 aux orifices de distribution ménagés dans le canal de distribution du fluide de séchage, sans être au contact du fluide de nettoyage et sans contact avec l'extérieur de la tige 2. Par ailleurs, l'ensemble d'acheminement du fluide de nettoyage consiste en une succession d'éléments non alignés, à savoir l'embout d'admission 110 désaxé par rapport au canal de distribution 21 réalisé spécifiquement dans la tige 2 et dans lequel le doigt associé à l'embout d'admission du fluide de nettoyage est logé. Le fluide de nettoyage passe de l'embout d'admission 111 aux orifices de distribution ménagés dans le canal de distribution du fluide de nettoyage, en passant au préalable dans une chambre 14 dans laquelle il est en contact avec l'extérieur de la tige 2. En cela, l'ensemble d'acheminement du fluide de nettoyage fait partie des moyens de déplacement de la tige d'admission puisque le fluide de nettoyage injecté dans la chambre 14, en attente de son passage dans la tige et de sa distribution via les orifices de distribution, pousse sur la tige à l'encontre de l'effort de rappel élastique exercé par le ressort. Les moyens de déplacement sont ainsi constitués du fluide de nettoyage et des moyens de remplissage sous pression de la chambre par ce fluide de nettoyage, et du ressort formant élément de rappel élastique.

De l'extrémité amont de la tige de distribution 2 vers son extrémité aval, le canal 21 de distribution du fluide de nettoyage présente, dans le dispositif selon l'invention, au moins une portion amont, de plus grand diamètre, une portion intermédiaire, dont le diamètre est légèrement inférieur au diamètre de la portion amont, et une portion aval dont le diamètre est inférieur à la fois à celui de la portion intermédiaire et à celui de la portion amont. Plus précisément, le canal 21 de distribution du fluide de nettoyage forme, à l'intersection entre sa portion amont et sa portion intermédiaire, un premier épaulement 210, et il forme, à l'intersection entre sa portion intermédiaire et sa portion aval, un deuxième épaulement 211. Il est à noter que si l'écart entre le diamètre de la portion amont et celui de la portion intermédiaire du canal de distribution 21 est relativement faible, l'écart entre le diamètre de la portion intermédiaire et celui de la portion aval de ce même canal de distribution 21 est nettement plus important, de telle manière que la portion aval de ce canal de distribution du fluide de nettoyage constitue une zone d'étranglement de ce dernier.

Le diamètre de la portion intermédiaire du canal 21 de distribution du fluide de nettoyage est très légèrement supérieur au diamètre extérieur du doigt 117. Plus précisément, selon l'invention, le diamètre de la portion intermédiaire du canal 21 de distribution du fluide de nettoyage, le diamètre extérieur du doigt 117 du corps creux 1, et les dimensions du joint torique 119 agencé au voisinage de l'extrémité aval de ce doigt 117 sont définis pour que ledit doigt 117 puisse coulisser de manière étanche au sein de la portion intermédiaire du canal 21 de distribution du fluide de nettoyage.

On comprend qu'il résulte de ce qui précède qu'un espace 212 est ménagé entre d'une part la paroi délimitant la portion amont du canal 21 de distribution du fluide de nettoyage et d'autre part le doigt 117, de sorte que du fluide de nettoyage peut circuler librement dans cet espace entre la cavité 14 et le premier épaulement 210.

Le canal 22 de distribution du fluide de séchage diffère du canal 21 de distribution du fluide de nettoyage, notamment dans l'absence d'un espace ménagé autour du tube d'acheminement 14 suffisant pour laisser s'écouler, le long de ce canal de distribution du fluide de séchage, du fluide de nettoyage provenant de la cavité 14. De l'extrémité amont de la tige de distribution 2 vers son extrémité aval, le canal 22 de distribution du fluide de séchage présente, dans le dispositif selon l'invention, au moins une portion amont et une portion aval dont le diamètre est inférieur à celui de la portion amont. Plus précisément, le canal 22 de distribution du fluide de séchage forme, à l'intersection entre sa portion amont et sa portion aval, un épaulement 220. Il est à noter que l'écart entre le diamètre de la portion amont et celui de la portion aval de ce même canal de distribution est relativement important, et que la portion aval de ce canal de distribution du fluide de séchage constitue une zone d'étranglement de ce dernier.

Le diamètre du canal 22 de distribution du fluide de séchage, en sa portion amont, est très légèrement supérieur au diamètre extérieur du tube d'acheminement 114 qui prolonge l'embout 111 d'admission dudit fluide de séchage. Plus précisément, selon l'invention, le diamètre de la portion amont du canal 22 de distribution du fluide de séchage, le diamètre extérieur du tube d'acheminement 114, et les dimensions du joint torique 116 agencé au voisinage de l'extrémité aval de ce tube d'acheminement 114 sont définis pour que ce dernier puisse coulisser de manière étanche au sein de la portion amont du canal 22 de distribution du fluide de séchage, de sorte que comme cela a été précisé précédemment, aucun espace n'est ménagé

Selon l'invention, la couronne 20 de la tige de distribution 2, située au voisinage de l'extrémité amont de celui-ci, présente un diamètre extérieur légèrement inférieur au diamètre intérieur de la bague 13 de fermeture du corps creux 1, c'est-à-dire, en d'autres termes, au diamètre de la cavité 14 de ce même corps creux 1.

Une gorge périphérique 200 est agencée dans la paroi extérieure de la couronne 20, pour accueillir un joint 201 et, selon l'invention, le diamètre extérieur de la couronne 20 de la tige de distribution 2 et le joint 201 sont définis pour que la tige de distribution 2, équipé de son joint 201, puisse coulisser de manière étanche au sein de la cavité 14 du corps creux 1. Tel qu'illustré, le joint 201 est un joint à lèvre.

L'assemblage du dispositif selon l'invention peut alors être réalisé de la manière suivante.

On assemble dans un premier temps le fond aval 23 et le manchon 13, en comprimant entre les deux pièces le joint torique 15b associé. Le ressort 3 est alors placé autour du manchon 121 du fond aval 12, en appui contre la face intérieure dudit fond aval 12.

La tige de distribution 2, équipé de son joint 201 logé dans la couronne 20, est ensuite inséré dans le manchon 121 de la partie aval 101 du corps creux 1, dans lequel il est, de par son diamètre extérieur et le diamètre intérieur dudit manchon, ajusté à coulisser librement tout en restant axialement aligné avec celui-ci, le joint 201 se trouvant alors mis en compression contre la paroi intérieure de la bague de fermeture, de telle manière que la tige de distribution puisse coulisser librement mais de manière étanche au sein de cette dernière. La bride 20 présente une surface d'appui pour le ressort 3 et son extrémité libre opposée à la paroi de fond amont, et le ressort 3 participe ainsi à la mise en position de la tige 2 par rapport au corps creux 1.

La partie amont 100 du corps creux 1 est ensuite emboîtée sur le premier manchon 131 de la bague de fermeture, en appui sur le joint torique 15a placé dans le fond amont 11. Dans cette opération, et de par les dimensions respectives de ces différents éléments, le doigt 117 et le tube d'acheminement 114 se trouvent simultanément engagés, respectivement, dans le canal 21 de distribution du fluide de nettoyage et dans le canal 22 de distribution du fluide de séchage agencés dans la tige de distribution 2.

L'ensemble ainsi constitué forme le dispositif d'admission et de distribution du dispositif selon l'invention.

Il résulte de ce qui précède que les positions relatives de la tige de distribution 2 et du corps creux 1 se trouvent, au sein de la cavité 14 de ce même corps creux 1, définies par l'équilibre qui s'établit entre la force de rappel du ressort 3 et la force qui peut s'exercer sur la face amont de la couronne 20 de la tige de distribution 2. En d'autres termes, les positions relatives du doigt 117 et du tube d'acheminement 114 au sein, respectivement, du canal 21 de distribution du fluide de nettoyage et du canal 22 de distribution du fluide de séchage sont également gouvernées par l'équilibre qui s'établira entre la force de rappel du ressort 3 et une force qui s'exercera sur la couronne 20 de la tige de distribution 2. Selon l'intensité de la force qui s'appliquera sur la face amont de la couronne 20 de la tige de distribution 2, ce dernier sera ou non entraîné à coulisser vers l'aval à travers le manchon 121 de la partie aval 101 du corps creux 1, en comprimant ou non le ressort 3. En l'absence de toute force appliquée sur la face amont de la couronne 20 de la tige de distribution 2, ce dernier se trouvera ainsi dans une première position extrême, ou position de repos, dans laquelle le ressort 3 sera totalement détendu. A l'inverse, lorsque le ressort 3 sera comprimé au maximum, la tige de distribution 2 aura atteint une deuxième position extrême, ou position de nettoyage, dans laquelle il aura coulissé au maximum vers l'aval, à travers le manchon 121 de la partie aval du corps creux 1.

La figure 2 présente le dispositif selon l'invention dans sa position de repos telle que décrite ci-dessus, dans laquelle seule la force de rappel du ressort 3 s'exerce sur la tige de distribution 2, en le maintenant au voisinage de la partie amont du corps creux 1, de sorte que ce ressort 3 est totalement détendu. Cette position correspond à une situation dans laquelle aucun fluide de nettoyage et aucun fluide de séchage n'est admis dans la tête d'admission et de distribution décrite précédemment. Dans cette position relative de la tige de distribution 2 et du corps creux 1, le doigt 117 est engagé dans le canal 21 de distribution du fluide de nettoyage de telle manière que le joint torique 119 agencé au voisinage de son extrémité aval se trouve dans la portion intermédiaire dudit canal de distribution du fluide de nettoyage, qui se trouve ainsi fermé de manière étanche. Un fluide éventuellement présent dans l'embout 110 d'admission de fluide de nettoyage ne peut donc pas, dans cette position de repos, circuler jusqu'à la portion aval du canal 21 de distribution de fluide de nettoyage. Il est à noter que, comme le montre la figure 2, cette étanchéité entre embout 110 d'admission du fluide de nettoyage et portion aval du canal 21 de distribution de ce même fluide est complétée par l'étanchéité résultant de l'appui de l'extrémité amont de la tige de distribution 2 contre la face intérieure du fond amont 11. Il est également à noter que, comme le montre la figure 2, la paroi intérieure du fond amont 11, l'extrémité amont de la tige de distribution 2, la face amont de la couronne 20 de cette même tige de distribution, et la paroi intérieure du premier manchon 131 de la bague de fermeture délimitent ensemble une chambre d'admission 4. Cette chambre d'admission 4 est étanche grâce à la présence du joint 201 placé en périphérie de la couronne 20 de la tige de distribution et grâce à la présence du joint 15a contre lequel le premier manchon 131 de la bague de fermeture est en appui. Dans la position de repos illustrée par la figure 2, et comme cela a été exposé plus haut, cette chambre d'admission 4 est également, par la position du doigt 117 au sein de la portion intermédiaire du canal 21 de distribution du fluide de nettoyage, étanche vis-à-vis de la portion aval de ce dernier. Dans la position de repos illustrée par la figure 2, un fluide présent dans l'embout 111 d'admission du fluide de séchage peut, en revanche, librement circuler jusqu'à l'extrémité aval du canal 22 de distribution du fluide de séchage.

La figure 3 illustre, pour sa part, le dispositif selon l'invention dans la position de nettoyage définie précédemment. Lorsqu'un fluide est admis, selon la direction représentée par la flèche A, par l'embout 110 d'admission du fluide de nettoyage, il pénètre dans la chambre d'admission 4 précitée, dans laquelle il exerce, sur la face amont de la couronne 20 de la tige de distribution, une force qui conduit cette tige de distribution à coulisser vers l'aval au sein du corps creux 1 en éloignement de la paroi amont et en comprimant le ressort 3, augmentant ainsi le volume de la chambre d'admission 4. Le coulissement vers l'aval de la tige de distribution 2 relativement au corps creux 1 entraîne un coulissement relatif du doigt 117 en direction de la portion amont du canal 21 de distribution de fluide de nettoyage au sein de la tige de distribution. Il faut bien comprendre ici que seul la tige de distribution se déplace, et que ce sont uniquement les positions relatives de ses différents composants avec les différents composants du corps creux 1 qui changent.

Les dimensions des différents composants du dispositif selon l'invention sont définies de telle manière que, dans le coulissement relatif du doigt 117 vers la portion amont du canal 21 de distribution du fluide de nettoyage, le joint torique 119 placé à l'extrémité aval de ce doigt 117 franchit, en direction de l'amont, le premier épaulement 210 défini par l'intersection de la portion amont et de la portion intermédiaire du canal 21 de distribution du fluide de nettoyage, et se trouve ainsi au sein de ladite portion amont dudit canal de distribution. Et puisque le diamètre de cette portion amont est légèrement supérieur à celui de la portion intermédiaire de ce canal de distribution, le coulissement du doigt 117 au sein de ce dernier n'est alors plus étanche. Le fluide de nettoyage peut donc s'écouler jusqu'à la portion aval de ce canal 21 de distribution et ainsi jusqu'aux orifices de distribution correspondants et jusqu'à la surface du capteur optique à nettoyer. Il est à noter ici que la présence de l'appendice 1170, de plus petit diamètre, à l'extrémité du doigt 117 permet une meilleure circulation du fluide de nettoyage en évitant tout effet de "succion" qui pourrait survenir au moment du franchissement, par le joint torique 119, du premier épaulement 210. Le coulissement relatif du doigt 117 dans la portion amont du conduit 21 de distribution du fluide de nettoyage se poursuit jusqu'à ce que l'admission de fluide par l'embout 110 cesse, ou jusqu'à ce que la face aval de la couronne 20 de la tige de distribution se trouve en appui sur l'extrémité amont du manchon 121 du corps creux 1, comme l'illustre la figure 3. Dans cette position de nettoyage, la tige de distribution 2 est dans une position extrême déployée en aval du corps creux 1, qui correspond à une position dans laquelle les orifices de distribution respectivement du fluide de nettoyage et du fluide de séchage situés à son extrémité aval sont au plus proche de la surface du capteur optique à nettoyer.

Lorsque l'admission de fluide de nettoyage cesse, la force de rappel du ressort 3 conduit ce dernier à se détendre jusqu'à retrouver sa position initiale, en poussant sur la face aval de la couronne 20, à l'opposé du manchon 121. Dans ce mouvement, la tige de distribution 2 coulisse alors, cette fois, vers l'amont du dispositif selon l'invention, et le volume de la chambre d'admission 4 diminue, celle-ci se vidant notamment par le canal 21 de distribution du fluide de nettoyage. Ceci se poursuit jusqu'à ce que le joint torique 119 placé à l'extrémité aval du doigt 117 franchisse, en direction de l'aval cette fois, le premier épaulement 210 défini par l'intersection de la portion amont et de la portion intermédiaire du canal 21 de distribution du fluide de nettoyage et que ce joint torique 119 se trouve dans ladite portion intermédiaire dudit canal de distribution. Le coulissement du doigt 117 relativement au canal 21 de distribution du fluide de nettoyage devient alors à nouveau étanche, et le fluide de nettoyage ne peut plus s'écouler jusqu'à la portion aval de ce même canal de distribution et jusqu'aux orifices de distribution correspondants.

Il est à noter que, lors de ces différentes opérations, le tube d'acheminement 114 qui prolonge, au sein de la cavité 14 du corps creux 1, l'embout 11 d'admission du fluide de séchage, se déplace, de la même manière que le doigt 117, relativement à la tige de distribution et, en particulier, relativement au canal 22 de distribution du fluide de séchage. Ainsi, lorsqu'une quantité de fluide de nettoyage est admise dans la chambre d'admission 4, le tube d'acheminement 114 est entraîné à coulisser au sein de ce canal 22 de distribution, en direction de la portion amont de celui-ci, et lorsque cette injection cesse, il est entraîné à coulisser, au sein de ce même canal 22 de distribution du fluide de séchage, en direction de la portion aval de celui-ci. Avantageusement, les dimensions respectives du tube d'acheminement 114 et de la tige de distribution 2 sont définies de telle manière que le coulissement relatif de ce tube d'acheminement au sein dudit canal 22 de distribution du fluide de séchage reste étanche quelles que soient les positions relatives de ces deux éléments. Il est, par ailleurs, à noter que, comme le montrent les figures 2 et 3, un fluide admis par l'embout 111 d'admission du fluide de séchage peut, quelles que soient les positions relatives de la tige de distribution 2 et du corps creux 1, librement s'écouler jusqu'à la portion aval du canal 22 de distribution du fluide de séchage et, ainsi, jusqu'aux orifices de distribution correspondants et jusqu'à la surface du capteur optique considéré.

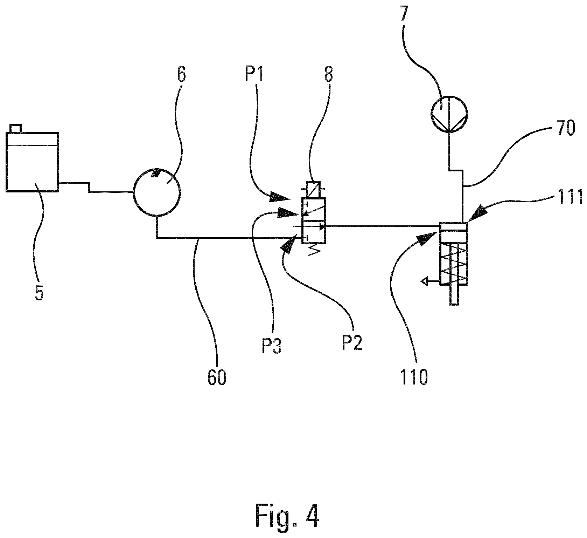

On va maintenant décrire l'architecture hydraulique du dispositif de nettoyage selon l'invention, notamment en se référant à la figure 4. L'architecture hydraulique du dispositif selon l'invention comporte un réservoir 5 de stockage d'un fluide de nettoyage, ainsi qu'une pompe 6 de circulation de ce fluide. Le fluide de nettoyage pompé est envoyé à travers une première conduite 60, sur laquelle est monté un distributeur 8 qui va être décrit ci-après et qui forme tout ou partie d'éléments de pilotage de la circulation du fluide de nettoyage entre le réservoir et le dispositif d'admission et de distribution de fluides D.

L'architecture hydraulique comprend également un réservoir 7 de stockage d'un fluide de séchage ou d'obtention d'un flux d'un tel fluide, équipé le cas échéant d'un compresseur qui permet d'obtenir un flux d'air comprimé approprié pour le séchage d'un capteur optique d'un système de détection optique d'un véhicule automobile, une deuxième conduite 70 étant agencée pour délivrer du fluide de séchage à partir du réservoir de stockage à l'intérieur du dispositif de nettoyage.

Le distributeur 8 permet de commander alternativement l'admission de fluide de nettoyage dans l'embout 110 d'admission du fluide de nettoyage et l'admission de fluide de séchage dans l'embout 111 d'admission du fluide de séchage. Pour ce faire, le distributeur 8 est piloté pour prendre au moins trois positions différentes, dont chacune correspond à un état opérationnel du dispositif selon l'invention : une position de repos, avec la première conduite 60 connectée au distributeur sur la première position P1 et dans laquelle aucun fluide de nettoyage ne passe à travers le distributeur, dans un sens ou dans l'autre, une position de passage aller, ou de remplissage, avec la première conduite 60 connectée au distributeur sur une deuxième position P2 (tel que visible sur la figure 4) et dans laquelle le fluide de nettoyage ne peut circuler que dans le sens allant du réservoir de stockage vers le dispositif d'admission et de distribution, et une position de passage retour, ou de vidage, avec la première conduite 60 connectée au distributeur sur une troisième position P3 et dans laquelle le fluide de nettoyage ne peut circuler que dans le sens allant du dispositif d'admission et de distribution au réservoir de stockage.

Ce distributeur est piloté par un module de commande, ici non représenté, configuré pour commander le changement d'état du distributeur et formant avec celui-ci les éléments de pilotage de la circulation d'au moins le fluide de nettoyage entre le réservoir de stockage et le dispositif d'admission et de distribution de fluides.

Ces éléments de pilotage sont configurés pour bloquer l'admission de fluide de nettoyage dans le dispositif d'admission et de distribution dans une position de repos, pour alimenter le dispositif d'admission et de distribution en fluide de nettoyage afin de déplacer le dispositif d'admission et de distribution dans une position de nettoyage d'une part et projeter du fluide de nettoyage d'autre part, et pour bloquer le fluide de nettoyage dans la cavité et maintenir le dispositif d'admission et de distribution dans la position de nettoyage, l'alimentation du fluide de séchage pouvant être pilotée indépendamment de l'alimentation du fluide de nettoyage.

Dans la position de repos, les moyens qui commandent la délivrance du fluide de nettoyage sont fermés, et aucun fluide n'est admis au sein du dispositif d'admission et de distribution du dispositif selon l'invention. Simultanément, l'admission du fluide de séchage est bloquée par une vanne appropriée ici non représentée.

Dans la position de passage aller, le distributeur 8 autorise l'admission d'une première quantité de fluide de nettoyage en direction du dispositif d'admission et de distribution, suffisante pour pousser sur la couronne de la tige et forcer le déploiement de la tige hors du corps creux. Simultanément, les moyens qui commandent la délivrance du fluide de séchage sont fermés. Plus précisément, dans cet état, la première quantité de fluide de nettoyage admise dans la chambre d'admission 4 au moyen du distributeur 8 est définie par les moyens de commande précités pour que le déplacement relatif du doigt 117 par rapport au canal 21 de distribution du fluide de nettoyage conduise le joint torique 119 placé au voisinage de l'extrémité aval du doigt 117 à franchir l'épaulement 210 et à se trouver dans la portion amont de ce canal de distribution, autorisant ainsi l'écoulement du fluide de nettoyage vers la portion aval et vers les orifices de distribution correspondants et vers la surface du capteur optique à nettoyer. Dans cet état, la tige de distribution 2 est dans sa position extrême déployée vers l'aval. Le distributeur 8 reste dans cette position de remplissage du dispositif d'admission et de distribution jusqu'à ce que la projection de fluide de nettoyage via le canal 21 de distribution du fluide de nettoyage soit effectuée.

Lorsque l'on souhaite procéder au séchage du capteur optique, on pilote le distributeur 8 pour qu'il reprenne une position de repos, afin de stopper l'arrivée de fluide de nettoyage et surtout de bloquer le retour du fluide présent à ce moment dans la chambre 4. On comprend en effet qu'il est nécessaire selon l'invention que la tige de distribution 2 reste en position déployée de nettoyage avec les orifices de distribution disposés au voisinage du capteur optique à nettoyer, afin que le fluide de séchage soit projeté au plus près du capteur optique. Le fluide de nettoyage est bloqué et il ne peut être éjecté de la chambre d'admission malgré l'effort de rappel du ressort. Seule une infirme portion de fluide est éjectée par le canal 21 de distribution du fluide de nettoyage avant que le doigt ne coulisse sous l'effet du ressort jusqu'à ce que le joint torique agencé autour du doigt 117 prenne position dans la portion intermédiaire du canal 21 de distribution de fluide de nettoyage.

Dans cette position de repos, on procède alors au pilotage de la vanne autorisant ou bloquant le passage de fluide de séchage vers le dispositif d'admission et de distribution. Le fluide de séchage est projeté sur le capteur optique, en passant par un canal de distribution distinct de celui dans lequel le fluide de nettoyage circule. Lorsque la quantité suffisante de fluide de séchage a été projetée, on bloque l'arrivée de fluide de séchage et on pilote le distributeur 8 dans la position de vidage pour évacuer le fluide de nettoyage présent dans la chambre 4. Il en résulte un escamotage de la tige de distribution vers l'intérieur du corps creux 1. On peut noter que la circulation de fluide de séchage est indépendante de celle de fluide de nettoyage, de sorte que l'alimentation en fluide de séchage peut être réalisée simultanément ou à la suite de l'alimentation en fluide de nettoyage sans que le fluide de séchage projeté soit humidifié par la présence de résidu de fluide de nettoyage.

L'invention permet ainsi, par la simple utilisation des moyens de pilotage du type distributeur et la configuration innovante du dispositif d'admission et de distribution décrite précédemment, de réaliser un dispositif de nettoyage, qui est destiné à projeter au moins un fluide vers une surface à nettoyer d'un véhicule automobile, tel qu'un capteur optique d'un système de détection optique, qui est d'un pilotage simple, et qui exclut tout risque de mélange des fluides de nettoyage et de séchage lors d'une opération de nettoyage, et notamment le risque de projeter un fluide de séchage humidifié avant son injection par un résidu de fluide de nettoyage. L'invention permet donc ainsi d'améliorer l'efficacité et la qualité d'un tel nettoyage et d'améliorer la qualité du signal fourni par ce capteur et l'aide à la conduite qui y est associée.

L'invention ne saurait toutefois se limiter aux moyens et configurations décrits et illustrés. En particulier, si l'invention a été décrite ici dans un mode de réalisation dans lequel la géométrie générale du dispositif d'admission et de distribution et de ses composants est une géométrie cylindrique, il va de soi que l'invention s'applique à tout type de géométrie et de formes, dans la mesure où les éléments réalisant les différentes étanchéités et fonctionnalités décrites ici sont présents.

## Revendications

1. Dispositif de nettoyage, destiné à projeter au moins un fluide vers une surface à nettoyer d'un véhicule automobile, tel qu'un capteur optique d'un système de détection optique, le dispositif de nettoyage comprenant au moins un dispositif d'admission et de distribution de fluides (D) dans lequel sont admis sélectivement un fluide de nettoyage et un fluide de séchage depuis un embout d'admission (110, 111) propre à chaque fluide, ce dispositif d'admission et de distribution (D) comportant un corps creux (1) à l'intérieur duquel sont agencés des canaux distincts (21, 22) de distribution respectivement du fluide de nettoyage et du fluide de séchage et des ensembles d'acheminement distincts (112,114,21 ; 113,22) de chacun des fluides depuis leur embout d'admission (110,111) respectif vers leur canal (21,22) de distribution respectif, **caractérisé en ce que** les canaux distincts (21, 22) de distribution sont ménagés dans une tige d'admission et de distribution (2) agencée dans le corps creux (1) du dispositif d'admission et de distribution.

2. Dispositif de nettoyage selon la revendication 1, **caractérisé en ce que** les canaux distincts (21, 22) de distribution respectivement du fluide de nettoyage et du fluide de séchage comportent des orifices de distribution propres à chaque canal.

3. Dispositif de nettoyage selon la revendication 1 ou 2, **caractérisé en ce qu'**un embout d'admission débouche dans une cavité (14) formée dans le corps creux (1) et dans laquelle est logée la tige (2), l'autre embout d'admission débouchant directement dans un tube d'acheminement (114) logé dans un canal d'admission correspondant (22) formé dans la tige (2).

4. Dispositif de nettoyage selon l'une quelconque des revendications précédentes, **caractérisé en ce qu'**il comporte des moyens de déplacement de la tige d'admission et de distribution (2) entre une position de repos et une position déployée à l'intérieur du corps creux (1).

5. Dispositif de nettoyage selon la revendication précédente, **caractérisé en ce que** lesdits moyens de déplacement de la tige d'admission et de distribution (2) comprennent des moyens communs avec un ensemble d'acheminement d'un des fluides.

6. Dispositif de nettoyage selon la revendication 4 ou 5, **caractérisé en ce que** les moyens de déplacement de la tige d'admission et de distribution comprennent un élément de rappel élastique (3) en position de la tige.

7. Dispositif de nettoyage selon l'une des revendications 4 à 6, **caractérisé en ce que** le canal (22) de distribution de fluide de séchage présente un diamètre sensiblement constant au moins dans la portion dans laquelle est amenée à se déplacer le tube d'acheminement (114), et **en ce qu'**une gorge périphérique (115) est agencée dans la paroi extérieure du tube d'acheminement (114) pour accueillir un joint d'étanchéité (116) configuré pour frotter contre le canal (22) de distribution de fluide de séchage dans lequel est logé le tube d'acheminement (114).

8. Dispositif de nettoyage selon l'une quelconque des revendications précédentes, **caractérisé en ce qu'**un doigt (117) s'étend à l'intérieur du canal (21) de distribution de fluide de nettoyage, le doigt (117) étant décalé par rapport à l'axe d'allongement de l'embout d'admission (110) du fluide de nettoyage.

9. Dispositif de nettoyage selon la revendication 8, combinée avec la revendication 3, **caractérisé en ce que** le canal (21) de distribution du fluide de nettoyage présente des portions de diamètres différents, ces diamètres allant, de l'extrémité amont de la tige de distribution vers son extrémité aval, en décroissant, au moins l'extrémité aval du doigt (117) étant configurée pour s'étendre dans des portions de diamètres différents selon le déplacement relatif du doigt par rapport à la tige.

10. Dispositif de nettoyage selon la revendication 9, **caractérisé en ce que** le diamètre du canal (21) de distribution du fluide de nettoyage en sa portion intermédiaire, le diamètre extérieur du doigt (117) du corps creux (1) sont définis pour que ledit doigt (117) puisse coulisser de manière étanche au sein de la portion intermédiaire du canal (21) de distribution du fluide de nettoyage et laisser passage au fluide de nettoyage lorsque le joint est au sein de la portion amont.

11. Dispositif de nettoyage selon la revendication 3 à 10, **caractérisé en ce que** la tige de distribution (2) comporte, au voisinage de son extrémité amont, une couronne (20).

12. Dispositif de nettoyage selon la revendication précédente, **caractérisé en ce qu'**une gorge périphérique (200) est agencée dans la paroi extérieure de la couronne (20), pour accueillir un joint d'étanchéité (201), de telle manière que la tige de distribution (2), équipé dudit joint (201), puisse coulisser de manière étanche au sein du corps creux (1).

13. Dispositif de nettoyage selon l'une des revendications précédentes, **caractérisé en ce qu'**il comprend, outre le dispositif d'admission et de distribution (D) porteur des canaux de distribution distincts (21,22), un réservoir de stockage (5) du fluide de nettoyage, un réservoir de stockage (7) du fluide de séchage, et des éléments de pilotage (8) de la circulation de fluide de nettoyage entre le réservoir et le dispositif d'admission et de distribution, configurés pour bloquer l'admission de fluide de nettoyage dans le dispositif d'admission et de distribution (D) dans une position de repos, pour alimenter le dispositif d'admission et de distribution en fluide de nettoyage afin de déplacer ce dispositif d'admission et de distribution dans une position de nettoyage d'une part et projeter du fluide de nettoyage d'autre part, et pour bloquer le fluide de nettoyage dans la cavité et maintenir le dispositif d'admission et de distribution de fluides (D) dans la position de nettoyage, l'alimentation du fluide de séchage pouvant être pilotée indépendamment de l'alimentation du fluide de nettoyage.

14. Véhicule automobile équipé d'un système de détection optique, **caractérisé en ce qu'**il comporte au moins un dispositif de nettoyage selon l'une des revendications précédentes pour le nettoyage d'un capteur optique de ce système de détection optique.

## Patentansprüche

1. Reinigungsvorrichtung, dazu bestimmt, mindestens ein Fluid zu einer zu reinigenden Fläche eines Kraftfahrzeugs, wie einem optischen Sensor eines optischen Erfassungssystems, zu spritzen, wobei die Reinigungsvorrichtung mindestens eine Vorrichtung zum Einlass und zur Ausgabe von Fluiden (D) enthält, in die selektiv ein Reinigungsfluid und ein Trocknungsfluid ausgehend von einem jedem Fluid eigenen Einlassaufsatz (110, 111) eingelassen werden, wobei diese Einlass- und Ausgabevorrichtung (D) einen Hohlkörper (1) aufweist, in dessen Innerem unterschiedliche Ausgabekanäle (21, 22) des Reinigungsfluids bzw. des Trocknungsfluids und unterschiedliche Weiterleitungseinheiten (112, 114, 21; 113, 22) jedes der Fluide von seinem jeweiligen Einlassaufsatz (110, 111) zu seinem jeweiligen Ausgabekanal (21, 22) angeordnet sind, **dadurch gekennzeichnet, dass** die unterschiedlichen Ausgabekanäle (21, 22) in einer Einlass- und Ausgabestange (2) ausgespart sind, die im Hohlkörper (1) der Einlass- und Ausgabevorrichtung angeordnet ist.

2. Reinigungsvorrichtung nach Anspruch 1, **dadurch gekennzeichnet, dass** die unterschiedlichen Ausgabekanäle (21, 22) des Reinigungsfluids bzw. des Trocknungsfluids jedem Kanal eigene Ausgabeöffnungen aufweisen.

3. Reinigungsvorrichtung nach Anspruch 1 oder 2, **dadurch gekennzeichnet, dass** ein Einlassaufsatz in einen Hohlraum (14) mündet, der im Hohlkörper (1) geformt ist und in dem die Stange (2) untergebracht ist, während der andere Einlassaufsatz direkt in ein Weiterleitungsrohr (114) mündet, das in einem entsprechenden Einlasskanal (22) untergebracht ist, der in der Stange (2) geformt ist.

4. Reinigungsvorrichtung nach einem der vorhergehenden Ansprüche, **dadurch gekennzeichnet, dass** sie Verschiebeeinrichtungen der Einlass- und Ausgabestange (2) zwischen einer Ruhestellung und einer ausgezogenen Stellung innerhalb des Hohlkörpers (1) aufweist.

5. Reinigungsvorrichtung nach dem vorhergehenden Anspruch, **dadurch gekennzeichnet, dass** die Verschiebeeinrichtungen der Einlass- und Ausgabestange (2) gemeinsame Einrichtungen mit einer Weiterleitungseinheit eines der Fluide enthalten.

6. Reinigungsvorrichtung nach Anspruch 4 oder 5, **dadurch gekennzeichnet, dass** die Verschiebeeinrichtungen der Einlass- und Ausgabestange ein elastisches Rückstellelement (3) der Stange enthalten.

7. Reinigungsvorrichtung nach einem der Ansprüche 4 bis 6, **dadurch gekennzeichnet, dass** der Ausgabekanal (22) von Trocknungsfluid zumindest in dem Abschnitt, in dem das Weiterleitungsrohr (114) veranlasst wird, sich zu verschieben, einen im Wesentlichen konstanten Durchmesser aufweist, und dass eine Umfangskehle (115) in der Außenwand des Weiterleitungsrohrs (114) angeordnet ist, um eine Dichtung (116) aufzunehmen, die konfiguriert ist, gegen den Ausgabekanal (22) von Trocknungsfluid zu reiben, in dem das Weiterleitungsrohr (114) untergebracht ist.

8. Reinigungsvorrichtung nach einem der vorhergehenden Ansprüche, **dadurch gekennzeichnet, dass** ein Finger (117) sich im Inneren des Ausgabekanals (21) von Reinigungsfluid erstreckt, wobei der Finger (117) bezüglich der Ausdehnungsachse des Einlassaufsatzes (110) des Reinigungsfluids versetzt ist.

9. Reinigungsvorrichtung nach Anspruch 8, kombiniert mit Anspruch 3, **dadurch gekennzeichnet, dass** der Ausgabekanal (21) des Reinigungsfluids Abschnitte mit unterschiedlichen Durchmessern aufweist, wobei diese Durchmesser vom stromaufwärts vorderen Ende der Ausgabestange zu ihrem stromabwärts liegenden Ende abnehmen, wobei mindestens das stromabwärts liegende Ende des Fingers (117) konfiguriert ist, sich in Abschnitten unterschiedlicher Durchmesser gemäß der relativen Verschiebung des Fingers bezüglich der Stange zu erstrecken.

10. Reinigungsvorrichtung nach Anspruch 9, **dadurch gekennzeichnet, dass** der Durchmesser des Ausgabekanals (21) des Reinigungsfluids in seinem Zwischenabschnitt, der Außendurchmesser des Fingers (117) des Hohlkörpers (1) so definiert sind, dass der Finger (117) dicht innerhalb des Zwischenabschnitts des Ausgabekanals (21) des Reinigungsfluids gleiten und das Reinigungsfluid durchlassen kann, wenn die Dichtung sich innerhalb des stromaufwärts liegenden Abschnitts befindet.

11. Reinigungsvorrichtung nach Anspruch 3 bis 10, **dadurch gekennzeichnet, dass** die Ausgabestange (2) in der Nähe ihres stromaufwärts liegenden Endes einen Kranz (20) aufweist.

12. Reinigungsvorrichtung nach dem vorhergehenden Anspruch, **dadurch gekennzeichnet, dass** eine Umfangskehle (200) in der Außenwand des Kranzes (20) angeordnet ist, um eine Dichtung (201) aufzunehmen, so dass die mit der Dichtung (201) ausgestattete Ausgabestange (2) dicht innerhalb des Hohlkörpers (1) gleiten kann.

13. Reinigungsvorrichtung nach einem der vorhergehenden Ansprüche, **dadurch gekennzeichnet, dass** sie außer der unterschiedliche Ausgabekanäle (21, 22) tragenden Einlass- und Ausgabevorrichtung (D) einen Speicherbehälter (5) des Reinigungsfluids, einen Speicherbehälter (7) des Trocknungsfluids und Steuerelemente (8) der Reinigungsfluidströmung zwischen dem Behälter und der Einlass- und Ausgabevorrichtung enthält, die konfiguriert sind, in einer Ruhestellung den Einlass von Reinigungsfluid in die Einlass- und Ausgabevorrichtung (D) zu blockieren, die Einlass- und Ausgabevorrichtung mit Reinigungsfluid zu versorgen, um diese Einlass- und Ausgabevorrichtung einerseits in eine Reinigungsstellung zu verschieben und andererseits Reinigungsfluid zu spritzen, und das Reinigungsfluid im Hohlraum zu blockieren und die Einlass- und Ausgabevorrichtung von Fluiden (D) in der Reinigungsstellung zu halten, wobei die Versorgung mit Trocknungsfluid unabhängig von der Versorgung mit Reinigungsfluid gesteuert werden kann.

14. Kraftfahrzeug, das mit einem optischen Erfassungssystem ausgestattet ist, **dadurch gekennzeichnet, dass** es mindestens eine Reinigungsvorrichtung nach einem der vorhergehenden Ansprüche zum Reinigen eines optischen Sensors dieses optischen Erfassungssystems aufweist.

## Claims

1. Cleaning device, intended for spraying at least one fluid onto a motor vehicle surface to be cleaned, such as an optical sensor of an optical detection system, the cleaning device comprising at least one fluid inlet and distribution device (D) into which a cleaning fluid and a drying fluid are selectively admitted from an inlet nozzle (110, 111) specific to each fluid, this inlet and distribution device (D) having a hollow body (1) inside which separate distribution channels (21, 22) for distributing the cleaning fluid and the drying fluid, respectively, and separate conveying units (112, 114, 21; 113, 22) for conveying each of the fluids from their respective inlet nozzle (110, 111) to their respective distribution channel (21, 22) are arranged, **characterized in that** the separate distribution channels (21, 22) are formed in an inlet and distribution rod (2) arranged in the hollow body (1) of the inlet and distribution device.

2. Cleaning device according to Claim 1, **characterized in that** the separate distribution channels (21, 22) for distributing the cleaning fluid and the drying fluid, respectively, have distribution orifices specific to each channel.

3. Cleaning device according to Claim 1 or 2, **characterized in that** one inlet nozzle opens into a cavity (14) which is formed in the hollow body (1) and in which the rod (2) is housed, the other inlet nozzle opening directly into a conveying tube (114) housed in a corresponding inlet channel (22) formed in the rod (2).

4. Cleaning device according to any one of the preceding claims, **characterized in that** it has means for moving the inlet and distribution rod (2) between a rest position and an extended position inside the hollow body (1) .

5. Cleaning device according to the preceding claim, **characterized in that** said means for moving the inlet and distribution rod (2) comprise means shared with an assembly for conveying one of the fluids.

6. Cleaning device according to Claim 4 or 5, **characterized in that** the means for moving the inlet and distribution rod comprise an elastic return element (3) for returning the rod into position.

7. Cleaning device according to one of Claims 4 to 6, **characterized in that** the drying fluid distribution channel (22) has a substantially constant diameter at least in the portion in which the conveying tube (114) is made to move, and **in that** a peripheral groove (115) is arranged in the outer wall of the conveying tube (114) to receive a seal (116) configured to rub against the drying fluid distribution channel (22) in which the conveying tube (114) is housed.

8. Cleaning device according to any one of the preceding claims, **characterized in that** a finger (117) extends inside the cleaning fluid distribution channel (21), the finger (117) being offset with respect to the axis of elongation of the cleaning fluid inlet nozzle (110) .

9. Cleaning device according to Claim 8, in combination with Claim 3, **characterized in that** the cleaning fluid distribution channel (21) has portions with different diameters, these diameters decreasing from the upstream end of the distribution rod to the downstream end thereof, at least the downstream end of the finger (117) being configured to extend in portions with different diameters depending on the relative movement of the finger with respect to the rod.

10. Cleaning device according to Claim 9, **characterized in that** the diameter of the intermediate portion of the cleaning fluid distribution channel (21) and the outside diameter of the finger (117) of the hollow body (1) are defined so that said finger (117) can slide in a sealed manner within the intermediate portion of the cleaning fluid distribution channel (21) and allow the cleaning fluid through when the seal is within the upstream portion.

11. Cleaning device according to Claims 3 to 10, **characterized in that** the distribution rod (2) has a rim (20) in the vicinity of its upstream end.

12. Cleaning device according to the preceding claim, **characterized in that** a peripheral groove (200) is arranged in the outer wall of the rim (20) in order to receive a seal (201), such that the distribution rod (2), provided with said seal (201), can slide in a sealed manner within the hollow body (1).

13. Cleaning device according to one of the preceding claims, **characterized in that** it comprises, in addition to the inlet and distribution device (D) containing the separate distribution channels (21, 22), a cleaning fluid storage tank (5), a drying fluid storage tank (7), and elements (8) for controlling the circulation of cleaning fluid between the tank and the inlet and distribution device, said elements being configured to block the admission of cleaning fluid into the inlet and distribution device (D) in a rest position, to supply the inlet and distribution device with cleaning fluid in order both to move this inlet and distribution device into a cleaning position and to spray cleaning fluid, and to block the cleaning fluid in the cavity and keep the fluid inlet and distribution device (D) in the cleaning position, the supply of drying fluid being able to be controlled independently of the supply of cleaning fluid.

14. Motor vehicle equipped with an optical detection system, **characterized in that** it has at least one cleaning device according to one of the previous claims for cleaning an optical sensor of this optical detection system.
